# EUROPEAN PATENT APPLICATION

(11) **EP 2 954 781 A1**
(43) Date of publication of application: **16.12.2015**
(21) Application number: 14002046.2
(22) Date of filing: 13.06.2014
(51) Int. Cl.: A01N 59/06, A01N 59/00, A01N 65/00

(54) **Plant protection method using zeolite, other natural minerals and substances of plant origin**

(71) Applicant: Geoanalysis S.A., 55134 Thessaloniki (GR); Zartaloudis, Zois, 63200 New Moudania (GR)
(72) Inventor: Zartaloudis, Zois, 63200 New Moudania (GR)
(74) Representative: Kiorpelidou, Eva

(57) **Abstract**

This plant protection method builds on a basic composition of zeolite (clinoptilolite) with silicon minerals and if it is necessary, where appropriate, the addition of sulfur or hydrated copper suflate and substances of plant origin. The addition of *Azadirachta indica* fruit powder enhances the pest repellent properties of this composition, while the addition of *Salix alba* bark powder enhances the natural defense of the plant. Clinoptilolite acts as biocatalyst and stabilizes the action of the plant substances and mineral additives. With the application of these compositions in agriculture, the following are achieved: a) innovative plant protection and enhancement of the plant defense mechanisms b) better quality of plant products c) plant protection from the effects of low winter temperatures d) stress reduction from physiological and other agents e) increase of storage resistance of plant products.

## Description

### Introduction

Clinoptilolite (a natural type of zeolite) is used today in hydroponics and other soilless culture techniques and also as a substrate for plant growth in space, for nuclear waste management etc. (Mumpton, 1999). Zeolite last years is recognized as an important and suitable product for use currently in many agricultural practices. The properties of this low cost natural mineral, and especially its unique absorption capacity, ion exchange capacity, water absorption and desorption, but also its catalytic action render this as a unique natural material. Clinoptilolite has crystalline structure which consists of SiO₄ and AlO₄ tetrahedrons, combined together with mutual oxygen atoms. The negative charge from AlO₄ radicals is balanced from the presence of exchangeable cations - mainly calcium, magnesium, sodium, potassium and iron.

The fine perlite powder (natural amorphous silicon mineral) is amorphous isotropic material which provides mechanic defense to plant tissue (hardness and roughness). As it is absorbed by the plant cells it builds an intercellular mass and in combination with the calcium and potassium stabilizes the cell walls and increases plant capacity to cope with stress conditions. Higher plants can be classified to those storing silicon and those not storing and this relationship is expressed by the Si/Ca content ratio. Three ways of Si absorption by plants are recognized, such as active absorption, with a trend of Si accumulation (e.g. rice), passive diffusion, where they take it when there is available without accumulating it (e.g. cucumber), and negative absorption, where the use it at certain plant growth stages (e.g. tomato). The active Si absorption e.g. from rice is a metabolic procedure which depends on energy. In these plants the response in application (fertilization) of Si is spectacular and immediate. However, symptoms of Si deficiency have been proven to exist in crops without active absorption rate, such as tomato and cucumber. The symptoms in tomato do not appear at early stage of growth, but at the stage of its reproductive growth (Takahashi et.al., 1990).

Pesticide properties of *Azadiracta indica* plant are owed to the active biological anti-nutritive triterpenoids (they prevent the feeding of plant parasitic pests resulting to their death) contained in it and prevent their normal growth (growth regulators) causing disorders at the next stages and the following generations. Leaves and fruits extractions have been assessed for different plant pests with promising results. The biological action of azadiractine, a terpenoid from the *Azadiracta indica* plant has turned the research about natural pesticides to similar plant species, including *Melia azedarach* (González-Gómez et al., 2006). Vergara et al. (1997) mentioned that the effects from the action of the substances from the plant fruits are more efficient compared to the effect that they could have if they were applied alone. This is probably due to their combined action, because they act to the target pest with different ways at the same time, and as a result the possibility of resistance development is reduced. Furthermore, it is possible that a non-active compound from the fruit (not having by itself pesticide or other active action on pests) to play a catalytic role in the action of the active compounds increasing their efficiency. The same property has been shown by clinoptilolite in similar applications as a synergestic compound, alone or in combination with other minerals.

Plants live in a world which is occupied by numerous phytophagous pests. Despite the large variety of the phytophagous pests, the main part of the plant foliage survives. This is due to the plant capacity to resist a phytophagous pest attack (Strauss and Agrawal, 1999), or defend and thus reduce the damage (Constabel, 1999). Plants can use different strategies to defend against phytophagous pests. They apply morphological structure defense, such as hair, thorns and waxy substances which mechanically restrict the feeding of some phytophagous (Lucas et al., 2000). Furthermore, plants contain a large variety of secondary substances, which can work as anti-nutritive factors, or become either toxic or repellents (Scriber and Slansky, 1981; Constabel, 1999). The secondary substances traditionally split in three groups: carbonic such as phenols and terpenoids, and nitrogenous such as alkaloids (Taiz, and Zeiger, 1991). Phenolic substances are highly or moderately toxic substances, which frequently appear as glucosides, which are the least toxic forms in healthy plants (Hösel, 1981). These phenolic glucosides are usually stored in the vacuoles as water soluble compounds (Hösel, 1981). Salicylic compounds are phenolic glucosides which were found in willows and poplars, members of Salicaceae family (Pearl, I.A. and Darling, 1965). These compounds contain a central structural substance, which is salicin (2- O - β - D - glucoside of salicyl alcohol). Salicylics are frequently found at high levels in the bark and the leaves of the plant, while they are not contained in the roots (Julkunen - Tiitto, 1989). Salicin and salicortin are the most known salicylics, while acetysalicortin is found in few species (Julkunen-Tiitto, 1989). Salicylics are known to prevent the feeding of many phytophagous species, including insects (Tahvanainen et al., 1985b) and phytophagous mammals (Tahvanainen et al., 1985a). Despite the obvious benefits of the plant natural chemical defense, the production and sustenance of these chemical substances requires resources (energy), which will certainly not be available for plant growth and reproduction. As a result, the natural chemical defense can reduce the competitive capacity of the plants, leading to a deal between growth and defense (Herms and Mattson, 1992). In other words, plants have a dilemma: to grow or defend themselves (Herms and Mattson, 1992). The metabolic cost explains why all plants do not defend themselves at the highest level, but there is a significant variation in plant defense (Agrawal, 1999).

By using special compositions of natural minerals, having zeolite (clinoptilolite) as basic ingredient with or without the application of organic matter and, according to special cases, the application of specific substances of plant origin, we achieved:
a) Significant increase in yields of several crop plants,
b) Adequate protection from specific pathogens or crop pests,
c) Higher quality of products,
d) Protection from low temperature effects in outdoor crops during winter
e) Increase of resistance of products during storage (conservation).
Also, the fertility and water field capacity were increased with specific compositions, resulting in higher resistance of plants during drought periods and the hazard from soil borne plant infection agents was reduced.

### References

**Agrawal, A.A.** 1999. Induced plant defence in plants: The ecology and evolution of restrained defense. In: Agrawal, A.A.,Tuzun, S. and Bent, E. (editors). Induced Plant Defenses against Pathogens and Herbivores. Biochemistry, Ecology and Agriculture. APS Press, St. Paul, pp.137-166.
Constabel, C.P. 1999. A survey of herbivore-inducible defense proteins and phytochemicals. In: Agrawal, A.A., Tuzun, S. and Bent, E. (editors). Induced Plant Defenses against Pathogens and Herbivores. Biochemistry, Ecology and Agriculture. APS Press, St. Paul, pp.137-166.
Herms D.A. and Mattson, W.J. 1992. The dilemma of plants: to grow or defend. The Quarterly Review of Biology 67:283-335.
Hösel, W. 1981. Glycosylation and glycosides. In: Stumpf, P.K. and Conn, E.E. (editors). The Biochemistry of Plants, vol 7. Academic Press Incorporated, New York, pp. 725-755.
Julkunen-Tiitto, R. 1989. Distribution of certain phenolics in Salix species (Salicaceae). Ph.D. Thesis. University of Joensuu,Joensuu
Lucas, P.W. Turner, I.M., Dominy, N.J. and Yamashita, N. 2000. Mechanical defenses to herbivory. Annals of Botany 86:913-920.
Mumpton, F.A. 1999. La roca magica: uses of natural zeolites in agriculture and industry. Proc. Natl. Acad. Sci. USA, 96: 3463-3470.
Pearl, I.A. and Darling, S.F. 1965. Benzoates of salicyloyl salicin from the barks and leaves of Populus grandidenta and Populus tremuloides. Tappi 48:506- 508.
Scriber, J.M. and Slansky, F. Jr. 1981. The nutritional ecology of immature insects. Annual Reviews in Entomology 26:183-211.
Strauss, S.Y. and Agrawal, A.A. 1999. The ecology and evolution of plant tolerance to herbivory. Trends in Ecology and Evolution 14:179-185.
Tahvanainen, J., Helle, E., Julkunen-Tiitto, R. and Lavola, A. 1985a. Phenolic compounds of willow bark as deterrents against feeding by mountain hare. Oecologia 65:319-323.
Tahvanainen, J., Julkunen-Tiitto, R. and Kettunen, J. 1985b. Phenolic glycosides govern the food selection pattern of willow feeding leaf beetles. Oecologia 67:52-56.
Taiz, L. and Zeiger, E. 1991. Plant Physiology. The Benjamin/Cummings Publishing Company Incorporated, Redwood City
Takahashi, E., Ma, J.F., and Miyake, Y. (1990). The possibility of silicon as an essential element for higher plants. Comments Agric. Food Chem. 2: 99-122.
Vergara, C., Latorre, R., Marrion, N. V. & Adelman, J. P. (1998).Calcium-activated potassium channels. Current Opinion in Neurobiology 8, 321-329.

### Field of application

A broader field of application of the new products (natural compositions of minerals and natural substances) is agriculture and more specifically the **enhancement or stimulation of defense mechanisms and the plant** protection from soil borne or foliage pests and pathogens.

The application of minerals based on clinoptilolite in Agriculture for plant nutrition and protection is innovative, having a prospective use in biological production of plant products and in systems of integrated management in plant production. The potential use of these products is both for the soil improvement and the plant with foliar sprayings for its better nutrition and protection from pests and diseases. Also, it is used with soil applications for the enhancement of its defense mechanisms and the reduction of stress which comes from either physiological reasons (e.g. drought) or pathogen action (fungi, nematodes etc.). More specifically these products can be used in olive crops for Verticillium wilt, which is **a difficult to control disease and** requires **timely** (with the first appearance of symptoms) diagnosis. It also requires **integrated management** with all the available means (reduced irrigation, sound fertilization, right pruning, no or minimum wounds to the roots induced by human activity, no incorporation of branches in soil, sun sterilization, exploitation of the presence of beneficial microorganisms). By using less fertilization and water the sound management of soil and the reduction of pollution which comes from fertilizer leaching in underground aquifers are promoted. These compositions improve the soil structure of heavy soils increasing soil porosity and field water capacity. They reduce nitrate leaching and phosphates and their better management is favored. Their use in crops, apart from quality improvement of agricultural products, provides yield increase.

### Examples of applications of innovative compositions of natural minerals and plant origin substances

### ZEOSHELL ZF

It is a composition of natural zeolite (clinoptilolite) from 30 to 60% and opal or other silicon form, such as perlite powder (silicon, source of SiO₂) 40 to 70% (ZEOSHELL ZF1). These minerals have exceptionally low coefficient of thermal expansion, with remarkable resistance to high and thermal changes, which occurs outdoors during the winter period in the event of a short or medium frost period. Also, with the hydroscopic and bacteriostatic action mainly of clinoptilolite, which is contained in the natural zeolite of this composition, the surface of the aboveground plant part is protectively covered, and the pathogens and natural ice spicules, which consist of the main causes of the physiological effects of frosts on plant tissues, are inactivated. It has been designed as natural biological plant protection product. It provides an exceptional substrate for the beneficial microbial action. It increases the efficiency in fertilizer use. It has the capacity to release slowly and in a natural way nutrients to plants' root system, thus increasing their growth and yield. It contributes to the buffering of soil pH and reduces water losses. It increases production making soil more efficient, because it takes and controls the availability of all the necessary nutrients, such as potassium, magnesium, calcium and micronutrients, and releases them slowly when they are required. ZEOSHELL ZF1 in soil improves its physicochemical and nutritional properties. It provides impressive results in terms of plant growth rates, reduces disease infections in root systems, and increases the production and quality of agricultural products. In bulb crops (onion, garlic, beetroot, radish etc.) increased yields and improved quality **(Example 4).** Product's particle size (3-15µ) belongs to the group of spray products, but it can be used in root watering for soil applications. ZEOSHELL ZF1 contributes to the better distribution of the active ingredient of many plant protection products in the plant parts and due to its synergistic action (absorbance and management of the active ingredient) slows down its decomposition, increasing its efficiency and durability of its action **(Example 1).**

By adding, in the former described composition (ZEOSHELL ZF1), powder of *Azadiracta indica* plant fruits from 1 to 5% and salicin of plant origin (from *Salix alba* plant) from 1 to 2%, preventive and suppressive action against pest and pathogens is obtained (ZEOSHELL ZF2). Adding powder of *Azadiracta indica* fruits the repellent properties and the bacteriostatic action of this product are enhanced, and also salicin enhances even more the natural defense of the plant against pathogens. It improves the quality in cucumber plants (cucumber diameter and size) after root watering or foliar spraying, improves the productivity (cucumbers/plant), and protects plants from phytoparasitic nematodes activity **(Examples 2 and 3).** Also, repellent action against the olive fruit fly *(Bactrocera oleae)* has been shown with 3 to 5 applications (according to the sensitivity of the variety and the level of infestation **(Example 9).** It increases yields in cotton growing and protects from cotton bollworm infestation *(Helicoverpa armigera)* **(Example 5).** In potato, apart from the positive effect on quality and yield, it controlled successfully infestation from soil nematodes **(Example 3).** It contributes to the management of olive Verticillium wilt **(Example 10).** Apart from the above mentioned, it can be combined with all the nutrition and plant protection formulations in 4-6‰ dose, improving their performance. Also, in specific cases, it is recommended as basic ingredient of mixtures for the management of particular nutrition and plant protection problems, both to the soil and in foliar sprayings **(Example 3, B' Application Year).**

If in the basic composition (ZEOSHELL ZF1) powder (talc) of natural mineral sulfur from 20 to 30% is added, natural fungicide (ZEOSHELL ZF3), with particular action against mildews, and acaricide, with particular action against Eriophyidae family mites, properties will be obtained. This is superior compared to Sulfur in efficiency, time of action and safety of use. Successful foliar application of sulfur can be done only when temperature is between 18 and 38°C, at least for the sensitive crops, such as vineyard, while this new composition can be used outside these limits with safety. In relation to the sensitivity of crops, this composition is more tolerable compared to Sulfur. It has shown significant action in olive crop against leaf deformation mites of Eriophyidae family in olive orchards producing table olives, with two spring sprayings (April-May) in 6‰ and 8‰ doses, respectively **(Example 6).** Also, it has been used successfully against mites (Eriophyidae) and mildew of vineyard with 3-4 spring sprayings from flower bud swell stage to flowering with 10‰ to 8‰ doses, and also against *Aculops lycopersici* (tomato russet mite).

In the basic composition (clinoptilolite and silicon) the addition of hydrated copper sulfate (CuSO₄ x 5H₂O) from 10 to 15% in powder (talc) makes a natural product (ZEOSHELL ZF4) which has a strong action against sensitive fungi to copper, and also to most of the plant parasitic bacteria. In pome fruit crops (such as apple and pear), but also in stone fruit crops (nectarines, peaches), it has shown significant efficiency in monilinia management *(Monilinia laxa, Monilinia fructigena)* **(Example 7).** In olive crop, it has significant efficiency against peacock leaf spot *(Spilocaea oleagina)* **(Example 8),** in citrus crops, it is efficient against pseudomonas bacterium *(Pseudomonas syringae).* It has action against *Alternaria (Alternaria solani, Alternaria alternata)* in vegetable crops, and it is an excellent wound healing product and protects crops from frost effects.

### EXAMPLES

### Example 1

The effect of ZEOSHELL ZF1 was studied on the dispersion and time of action of pesticide active ingredient lambda cyhalothrin (pyrethroid) on olive leaves' surfaces. In Thessaloniki Thermi region, 4 olive branches were sprayed with dose: 10ml/100lt of lambda cyhalothrin pesticide 1.47% CS and then 4 more olive branches were sprayed with 10ml/100lt lambda cyhalothrin 1.47% CS + 1kg/100lt ZEOSHELL ZF1. After seven days leaves sampled from both treatments were analyzed, using the QuChERS method with two replicates from every sample and then quantitative and qualitative analysis was performed using GC-MS/MS chromatography system.

### Results are given below

| **Sample** | **lambda cyhalothrin ppm** | **lambda cyhalothrin ppm** | **Mean** |
|---|---|---|---|
| **Spraying with lambda cyhalothrin** | 0.296 | 0.735 | 0.516 |
| **Spraying with lambda cyhalothrin + ZEOSHELL ZF1** | 0.640 | 0.614 | 0.627 |

Results show that ZEOSHELL ZF1 contributes to better distribution of the active ingredient in plant parts (0.640 and 0.614 compared to 0.296 and 0.735) and also slows down the decomposition of the active ingredient, increasing its life time (higher mean: 0.627>0.516)

### Example 2

In Thessaloniki Nymfopetra region, the effect of ZEOSHELL ZF2 was studied on the growth and yield of greenhouse cucumbers in infected soil by phytoparasitic nematodes. a) ZEOSHELL ZF2, b) tree bark natural extract *Quillaja saponaria* Mol. (QL Agri 35 SL), c) natural polysaccharides (AGRIcolle), and d) organic matter + Cu ions (Theomin) were assessed. Experimental plots were in double rows spaced 60 cm apart and consisted of 20 plants per treatment in a completely randomized design and 4 replicates (5 plants per replicate). All experimental plots were irrigated by drip irrigation system. Control plants (no treated plants in the greenhouse) were receiving the same treatments (waterings, sprayings, prunings) apart from ZEOSHELL ZF2 root watering.

**Table 1. Root watering treatments in greenhouse cucumber crop**

| **No** | **Treatments** | **Dose/10lt** |
|---|---|---|
| 1 | ZEOSHELL ZF2 | 200g |
| 2 | Tree bark extract *Quillaja saponaria* Mol. (QL Agri 35 SL) | 150ml |
| 3 | Natural polysaccharides (AGRIcolle), | 30ml |
| 4 | Organic matter + Cu ions (Theomin) | 20ml |
| 5 | Control plants | - |

Table 1 products were applied first at 15 days interval (14/5, 28/5 and 11/6) and then 7 times per week from 16/7 to 27/8. The assessment was performed a week after the last treatment.

**Table 2. Results of root watering applications on greenhouse cucumber crop**

| **No** | **Treatments** | **Commercial cucumbers (diameter larger than 4cm, straight) per treatment** | **Plant health** |
|---|---|---|---|
| 1 | ZEOSHELL ZF2 | 11.8 | No symptoms of infection |
| 2 | QL Agri 35 SL | 9.2 | Light infection symptoms |
| 3 | AGRIcolle | 9.6 | Light infection symptoms |
| 4 | Theomin | 8.1 | Light infection symptoms |
| 5 | Control plants | 7 | Infection symptoms from nematodes |

Results showed significant differences in quality (diameter and cucumber size) and quantity of production (cucumber/plant), production stability and plant health. The best results were achieved by ZEOSHELL ZF2 with a mean of 11.8 commercial cucumber of excellent quality.

### Example 3

Until now, both in the international and Greek literature, there are limited data in relation to the presence of nematodes in potato crops for Greek soils. Most of the infestations are due to the presence of cyst potato nematodes *Globodera rostochiensis* and *G. pallida* (CPN), resulting in reduced size of potato tubers and also reduced total yield. Equally important seem to be the root-knot nematodes *(Meloidogyne* spp.), which can destroy all the production because of misshapen tubers. It is highly important that cyst nematodes are included in the quarantine pathogens. In Greece, nematode management until now takes place mainly by preventive use of nematicides, which does not always result in expected or desired effects, and furthermore, increases production costs, environment, and the product itself. **As it is broadly known though, nematode management, CPN in particular, is difficult and requires detailed design control programs, which include appropriate cultural measures, such as deep plowing, three year rotation, fallowing, sun sterilization, resistant cultivars, and all these in combination with chemical treatments.** In this case also, the complete extinction of a field from nematodes and particularly CPN seem to be impossible before the end of several years. In the K. Neurokopi region **a comparative study was conducted between certified active ingredients by the Ministry of Rural Development and Food, and also some other biological and natural products for their efficiency against nematodes.**

**Soil analysis for the presence of cyst nematodes *Globodera rostochiensis* and *G. pallida* Soil sampling**

Soil sampling took place according to European Union instructions regarding soil sampling within the context of National Program Surveys: From the experimental plot 48 subsamples were received, which finally were mixed to form a composite sample. The subsamples were received from parallel lines spaced at 10 cm and 7 m (about 10 steps) within the lines, up to 20 cm depth. The final sample was placed in plastic bag and sent to Benaki Phytopathological Institute for validation of cysts' presence of Globodera gender and their counting.

### Cysts' presence check and counting of the initial population

The soil sample was transferred in a 1 L conical flask and water was added to 1 L with water of high flow to obtain good shaking of the sample. Then, the sample was left undisturbed until the large particles of the soil settle down and the supernatant was drained through 200 µm sieve. Particles collected by the sieve were transferred to a filter paper placed on glass funnel by using a wash bottle to allow the draining and drying of the sample. The content of the filter paper was investigated in a stereoscope for the presence of cysts of *Globodera* gender and the counting of their number took place afterwards. Finally, the cysts were left in wet environment for 24 hours in order to check their viability.

### Results

30 cysts were identified in the entire soil sample, which contained live eggs.

### A' Year

Within the context of this program the following treatments were designed against potato nematodes. Every treatment included 4 replicates in 4 experimental plots completely randomized covering an area of 28.8m²/plot.

| **No** | **Treatments** | **Before seeding 21/4** | **Foliar sprayings 8/6,8/7,23/7** |
|---|---|---|---|
| 1 | Nemathorin (fosthiazate 10%) nematicide of Hellafarm S.A. | Incorporation 3kg/stremma | - |
| 2 | Vydate (oxamyl 10%) Nematicide of Dupond Hellas S.A. | Incorporation 4kg/ stremma | - |
| 3 | ZEOSHELL ZF2 | Incorporation 104 kg/ stremma | 3 sprayings 3.4 kg/ stremma with 85lt water |
| 4 | ZEOSHELL ZF2 | - | 3 sprayings 3.4 kg/ stremma with 85lt water |
| 5 | Nemathorin (1/2 δóση)(fosthiazate 10%) Nematicide of Hellafarm S.A. | Incorporation 1,5 kg/ stremma | - |
| 6 | Vydate (1/2 δóση) Nematicide of Dupond Hellas S.A. | Incorporation 2 kg/ stremma | - |
| 7 | Control plants | - | - |

### Results are shown in the following table

| **No** | **Treatments** | **% Symptoms on leaves 4/8/2010** | **Mean tuber weight in gr at harvest 13/9/2010** | **Efficiency indicator *** |
|---|---|---|---|---|
| 1 | Nemathorin | 55 | 163.31 | 2.97 |
| 2 | Vydate | 48 | 156.01 | 3.25 |
| 3 | ZEOSHELL ZF2 **incorporated in soil** | **8** | **164.37** | **20.55** |
| 4 | ZEOSHELL ZF2 | **10** | **163.76** | **16.38** |
| 5 | Nemathorin (1/2 dose) | 70 | 122.72 | 1.75 |
| 6 | Vydate (1/2 dose) | 65 | 117.59 | 1.81 |
| 7 | Control plants | 80 | 103.27 | 1.3 |

### Symptoms on leaves:

Significant reduction of leaf symptoms was observed in the experimental plots where ZEOSHELL ZF2 was applied with incorporation (8%) or without incorporation (10%). The recommended doses (48-55%) of the nematicides used (fosthiazate κατ oxamyl), differed compared to control plants, without though giving adequate reduction of symptoms on leaves, while the half doses of 65-70% did-not differ significantly compared to control plants (about 80%). The results given above show that the natural and biological agents can aid plants in managing nematodes much better compared nematicides.

### Mean tuber weight at harvest

In this criterion, higher mean tuber weight was observed for ZEOSHELL ZF2, while the other treatments achieved high means, apart from the control plants and the half doses of nematicides treatments.

Finally, combining the two criteria, the ratio of the **mean tuber weight in gr at harvest to the % symptoms on leaves was defined as efficiency indicator*. In this criterion** ZEOSHELL ZF2 is superior significantly. **The higher the numerator, the quality of the production is better and the lower the denominator, the potato plants are more vigorous. Thus, the higher the efficiency indicator, the product was more efficient.**

| No | Treatments | Establishment 11/4 Watering and incorporation | 3 foliar sprayings - soil 7/6, 22/6, 19/7 |
|---|---|---|---|
| 1 | ZEOSHELL ZF2 | 300g /plot: 10kg /stremma | 300g /plot: 10kg / stremma |
| 2 | ethoprop MOCAP | 240g /plot: 8kg/ stremma | - |
| 3 | fosthiazate NEMATHORIN | 90g /plot: 3kg/ stremma | - |
| 4 | oxamyl VYDATE | 120g /plot: 4kg/ stremma | - |
| 5 | Control plants | - | - |

| No | Treatments | Establishment 11/4 Watering and incorporation | 3 foliar sprayings - soil 7/6, 22/6, 19/7 | Percentage infection % | Efficiency indicator: Yield-Yield x Percentage infection |
|---|---|---|---|---|---|
| 1 | ZEOSHELL ZF2 | 300g /plot: 10kg /stremma | 300g /plot: 10kg/stremma | 18 a | 7.134 a |
| 2 | ethoprop MOCAP | 240g | - | 19 a | 6.156 b |
| 3 | fosthiazate NEMATHORIN | 90g | - | 16 a | 5.628 c |
| 4 | oxamyl VYDATE | 120g | - | 17 a | 5.312 c |
| 5 | Control plants | - | - | 82 c | 0.882 d |

### B' Year

Within the context of this program, the second year the following treatments were designed against potato nematodes. Each treatment included 4 replicates in 4 experimental plots completely randomized covering an area of 28.8m²/plot.

### Results

The results given above show that:

### 1. All treatments differ significantly compared to control plants

### Efficiency indicator of treatments

The efficiency indicator of treatments, calculated according the yield per experimental plot subtracted by the percentage infection per treatment, gave the following results:
The biological composition of minerals ZEOSHELL ZF2 seems to combine efficiency (protection) and higher crop yield compared to the other treatments and control plants.

### Example 4

In experimental field ZEOSHELL ZF1 was used in order to assess yields. The experimental plots were in doubled rows spaced at 40cm, and there was a corridor of 60 cm per meter of line, covering an area of 1x0.4 = 0.4m² in a completely randomized design and 4 replicates per treatment and plant species. Two treatments per crop occurred: 4 replicates with ZEOSHELL ZF1 application in soil and 4 replicates without ZEOSHELL ZF1 application. In each experimental plot where ZEOSHELL ZF1 was applied, 3 kg (1.5 kg per meter) of ZEOSHELL ZF1 was applied. All experimental plots were irrigated by drip irrigation system (9 drippers/ line). Seeding took place on 19 April and assessment took place at harvest of each species. For radish the root weight was recorded, for green onion the size of the stem and the diameter of the bulb and for beetroot the root weight. For the measurements 20 plants were randomly selected, for every crop and replication.

### Results

Results showed significant differences for the measured parameters as shown in the following tables.

### Radish

| **Mean root weight (g)** | |
|---|---|
| Radish with ZEOSHELL ZF1 | Radish without ZEOSHELL ZF1 |
| **22.0086±0.72** | **12.7831±0.5** |

The mean weight of ZEOSHELL ZF1 in radish was 72.2 % higher compared to that without ZEOSHELL ZF1.

### Beetroot

| **Mean root weight (g)** | |
|---|---|
| Beetroot with ZEOSHELL ZF1 | Beetroot without ZEOSHELL ZF1 |
| **123.5274±3.737** | **49.0926±2.076** |

The mean weight of beetroot with ZEOSHELL ZF1 was 151.62% higher compared to that without ZEOSHELL ZF1.

### Green onion

| **Mean length (cm)** | |
|---|---|
| Green onion with ZEOSHELL ZF1 | Green onion without ZEOSHELL ZF1 |
| **15.725±0.15** | **10.5±0.22** |

| **Mean diameter (cm)** | |
|---|---|
| Green onion with ZEOSHELL ZF1 | Green onion without ZEOSHELL ZF1 |
| **5.35±0.14** | **2.9438±0.1** |

The mean length in green onion with ZEOSHELL ZF1was 49.76% higher compared to that without ZEOSHELL ZF1, while the mean diameter with ZEOSHELL ZF1was 81.74% higher compared to that without ZEOSHELL ZF1.

### Example 5

Field of 100 stremmas size, grown with cotton and infected by cotton bollworm *(Helicoverpa armigera),* was investigated on 10 August at lasmos Komotini. It was found after this investigation that in 100 plants, randomly distributed within the field, there were 4 eggs at the black head stage, 9 larvae of early age and 12 larvae of old age. Crop infection was significant. 70 stremmas were sprayed with ZEOSHELL ZF2 20 kg/ton.

A day after spraying in 100 randomly taken plants 2 eggs were found at the black head stage, a larvae of early age and 4 larvae of old age.
In the field part not sprayed, 5 eggs of black head stage were found, 12 larvae of early age and 10 larvae of old age.

After 3 days in 100 randomly taken plants, 1 larvae of old age was found.
In the field part not sprayed, 3 eggs at black head stage were found, 10 larvae of young stage and 8 larvae of old stage.

At Galatisa Chalkidiki in June 2012, a preventive spraying took place at 2 stremmas of cotton with ZEOSHELL ZF2 20kg/ton, and in 25 stremmas a spraying took place with *Bacillus thuringiensis* 1 kg/stremma.
After 3 days in 100 plants at ZEOSHELL ZF2 application there was neither egg nor larvae.
In the non-sprayed part of the field 3 eggs at the black head stage were found, a larvae of early stage and 2 larvae of old stage.
**These results show that ZEOSHELL ZF2 controls adequately cotton bollworm** *(Helicoverpa **armigera).***

### Example 6

The experiment was designed in Agios Mamas Chalkidiki area. Before the treatments, precounting of the population took place. Experimental plots included 2 trees in 4 replications per treatment, in a completely randomized design. Trees were 28 years old and were sprayed using a hose of a sprayer mounted on a tractor.
Two sprayings took place at two different treatment times (before anthesis and at petal fall).

The following products were used:
1. Vertimec 1,8 EC (abamectin 1,8%) at 100cc/100lt dose,
2. Thiovit 80 WP (wettable sulfur 80%) at 400g/100lt dose,
3. ZEOSHELL ZF3 1000g/1001t
4. Control plants

Measurements included a random sample of 100 leaves and 50 fruits per experimental plot which were assessed for their level of infection. For the above mentioned assessment the following scale was used:

| **Infection characterization** | **Percentage infection Number of infected fruits per sample** | **Scale indicator** |
|---|---|---|
| No infection | 0% | **0** |
| Light infection | 1-5% | **1** |
| Medium infection | 5-10% | **2** |
| Heavy infection | 10-30% | **3** |
| Very heavy infection | 30-50% | **4** |
| Full infection | 50-100% | **5** |

All treatments were statistically significant differed compared to control plants, without having a statistically significant difference each other. The efficiency of treatments, as it was assessed by the infection scale, was satisfactory both for the leaf protection and for fruits, and the scale indicator varied from 0 to 1 (0-5% infection). In contrast, for control plants, leaves had an infection indicator near to 4 (30-50% infection) and fruits between 4 and 5, with infection above 50% on average.

The best protection both for the leaves and fruits was achieved by ZEOSHELL ZF3 (1000g/100lt) before anthesis (at inflorescence development stage). While for the fruits better protection was achieved by the two abamectin sprayings (100cc/1000lt) at the two aforementioned treatment times.

### Example 7

The experiment was designed at Ormylia Chalkidiki area. The experimental plots included 2 nectarine trees in 4 replications per treatment, in a completely randomized design. The trees were 12 years old.
A spraying took place. The following products were used:
1. Kocide 2000 35 WG (copper hydroxide 35%) at 200g/100lt dose,
2. Copper Sulfate (CuSO₄x5H₂O) at 1000g/100lt dose,
3. ZEOSHELL ZF4 at 1500g/100lt dose,
4. Control plants
The infection level of fruits was assessed per experimental plot.
All treatments differed significantly compared to control plants, without having a statistically significant difference each other (copper hydroxide 1.6%, copper sulfate 2.4% and ZEOSHELL ZF4 1.2%). The efficiency of treatments was satisfactory both for the protection of twigs and fruits. In contrast, control plants had infection higher that 80% on average.

### Example 8

The experiment was conducted in early September, in Metamorphosis Chalkidiki region. Experimental plots included 8 olive trees (*cv.* Chalkidiki) in 4 replicates per treatment, in a completely randomized design. Trees were 25 years old.

One spraying took place. The following products were used:
1. Kocide 2000 35 WG (copper hydroxide 35%) at 340g/100lt dose,
2. Bordeaux mixture 20% 650g/100lt,
3. ZEOSHELL ZF4 at 1500g/100lt dose,
4. Control plants,
The level of leaf infection from peacock leaf spot *(Spilocaea oleagina)* was assessed and the percentage of defoliation 20 days after spraying.

All treatments differed significantly compared to control plants. Trees from ZEOSHELL ZF4 treatments had lower percentage of infection (1-2%), while the other treatments varied in percentage infection (3-7%) without differing significantly each other. Control plants had 40% infection. Defoliation was according to infection. ZEOSHELL ZF4 efficiency was satisfactory for foliage protection. In contrast, control plants had higher percentage of defoliation.

### Example 9

The experiment was conducted from mid-June to September, in Agios Mamas Chalkidiki region. The experimental fields included 10 stremmas of olive crops (*cv.* Chalkidiki) in 4 replications per treatment, in a completely randomized design. Trees were 25 years old.

Four sprayings took place. The following products were used:
1. Rogor L 40 EC (dimethoate 40%) at 12.5 ml/100lt,
2. ZEOSHELL ZF2 at 1500g/100lt dose,
3. Control plants
The level of olive fruit infection per treatment 15 days before harvest of green olives (*cv.* Chalkidiki) was assessed.
All treatments differed significantly compared to control plants. Trees from ZEOSHELL ZF2 treatment had lower percentage of infection (0.5-1%) while for dimethoate treatment the percentage of infection varied between 6 and 7%. Control plants had 10% infection. The efficiency of ZEOSHELL ZF2 was significant in a year with particularly high populations of the insect (olive fruit fly).

### Example 10

Verticillium wilt of olive crop is a vascular wilt which is caused by the *Verticillium dahliae* fungi and exists in almost all olive growing countries. Its appearance has been recorded in the entire Mediterranean zone (Greece, Italy, Spain, Turkey, Morocco, Algeria, and Syria) but also in California (U.S.A.). In our country, it was recorded for first time in olive trees in 1952 at Central Greece. Last years the intensification (irrigation, fertilization, soil tillage) and wide spread of olive growing in Chalkidiki area, contributed to the significant spread of the disease, which is the most important fungi problem, because it is responsible for olive trees capital losses, and also for soil deterioration, which renders unsuitable for olive growing for many years. In Greece, the disease causes serious damages mainly to *cv.* Konservolia in irrigated olive orchards and relatively young trees (5-6 years old). In Chalkidiki, olive orchards dealing with great problems are mainly 10-12 years old, which agrees with Spanish data, and also the disease infects intensely both young and old trees (50 years old).

### Symptoms

The disease does not appear with the same symptoms in all trees and appears from May to November in two ways: sudden wilt **(acute form or apoplexy),** when the whole tree is infected and also with **the chronic form or slow decline,** which can appear as a sudden wilt of one or more branches. Apoplexy is observed mainly in young trees and nurseries. In this case the disease develops rapidly from the end of the winter to early spring. The leaves roll down, display an intense grey or brown color and become dead, and usually remain attached to the tree. The apoplexy is characterized by rapid drying of branches and buds, leading to tree death. With **the chronic form or slow decline** the symptoms are more distinct in fruitful years during anthesis and become intense during tree growing as its requirements for water increase. Wilting, rolling of young leaves, loss of the intense green color, loss of cuticular lipids are observed and leaves become pale to brown. Depending on the severity of infection, the wind and the sharp rise of temperature, defoliation and fruit drop can occur. Moreover, necrosis of inflorescences is observed, which remain attached on the tree. Fruit drying and necrosis remaining attached to the tree can happen even before harvest. Whole branches or even the top of the tree may die in one season. Olive trees usually recover from the non-infected parts, which can be infected though the following years. The disease appears in isolated trees or patches of few trees. In case of wood necrosis secondary infections from wood-boring insects are observed.

### Management

Today the disease management is based on prevention, along with **cultural practices,** which aim at the **introduction prevention** and **elimination of quantity and dispersion of the inoculum** in the field.

### EXPERIMENTS OF VERTICILLIUM MANAGEMENT IN OLIVE TREES

The experiments were conducted in Kalybia Polygyros Chalkidiki region in two different areas, in the south coastal zone (ktima Tsougkrani), and towards Polygyros (north zone - ktima Karagianni). These included root watering in two seasons (early autumn and spring). The products and doses used are mentioned below.

| **Doses of used products** | | **Dose/tree Root watering with 10 lt water** |
|---|---|---|
| 1. | **Micosat F BS WP** (beneficial microorganisms (Pseudomonas spp., Trichoderma harzianum, Glomus spp.) - distributed by BIORYL S.A. | **100g** |
| 2. | **Messenger** (Harpin: Protein of plant defense system activation )-Distributed by K&N Eythimiadis | **6g** |
| 3. | **Signum** (Fungicide mixture of the pyraclostrobin active ingredient belonging to the Qols (strobilurin) group, and the boscalid active ingredient belonging to the carboxamides' group) - distributed by BASF | **10g** |
| 4. | **Beltanol** (it is liquid soil fungicide-bactericide (8-Hydroxyquinoline sulfate) - distributed by Hellafarm | **6ml** |
| 5. | **ZEOSHELL ZF1** | **400g** |
| 6. | Bion (Fungicide in combination with activator of plant defense mechanism) - distributed by Syngenta | **10g** |

For the infection assessment, the following scale was used:

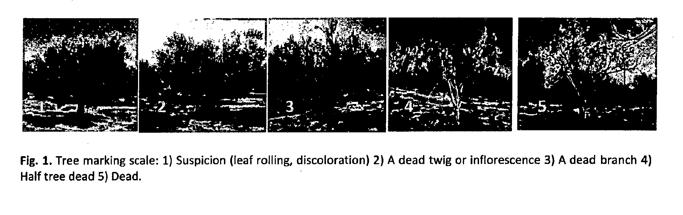

### Tree marking scale (Fig. 1, Annex C)

| **Observation** | **Mark** |
|---|---|
| **Suspicion (leaf rolling, discoloration)** | **1** |
| **A dead twig or inflorescence** | **2** |
| **A dead branch** | **3** |
| **Half tree dead** | **4** |
| **Dead** | **5** |

### Conclusions

In the two fields where the experiment took place, control plants (non-treated trees) survived with intense infection symptoms. **The best results were given from both two fields by ZEOSHELL ZF1 and Micosat F, (from 3.5 to ≤ 1) which means almost full recovery.** Reliable action was provided by Messenger and Beltanol (from 3.5 to ≤ 2).

## Claims

1. claim: The embodiments of the invention in which an exclusive property or privilege is claimed are defined as follows: The invention (Special composition of known minerals and substances of plant origin) highlights a new use, of these natural compounds, in the plant protection against major pests and diseases.
1. Method of plant protection against pests and diseases using special compositions which are based on (>50%) zeolite (clinoptilolite >85%) and other natural minerals in fine powder (0-50 µm).
2. Under the former condition (claim 1) mixtures of natural minerals are created, which, with addition of substances of plant origin, are used for the control of specific plant protection problems.
3. The former mentioned compositions (claim 1) protect outdoor crops from the effects of low temperature during the winter period.
4. Under the condition of claim 2, the increase in the resistance of the products during storage (long conservation) is achieved.
5. With the addition in the former described composition (claim 1) of powder from fruits of the *Azadirachta indica* plant (1 to 5%) and salicin of plant origin (1 to 2%) preventive and suppressive action against pests and pathogens of plants in greenhouse and outdoor crops is achieved.
6. The composition of claim 5 has shown preventive action against olive fly *(Bactrocera oleae).*
7. The composition of claim 5 in cotton crop increases yields and protects from bollworm infestation *(Helicoverpa armigera).*
8. The composition of claim 5 in potato crop, apart from the positive effect on quality and yield, controls successfully infestation from soil borne root-knot nematodes.
9. The composition of claim 1 contributes to the management of Verticillium wilt in olives.
10. The composition of claim 1 are combined with all the fertilization and plant protection products in doses 4-6% improving their performance.
11. With the addition of powder (talc) of natural mineral Sulfur 20 to 30% in the basic composition (claim 1) a natural fungicide, with particular action against mildews and a natural acaricide, with particular action against mites of Eriophyidae family, is created, which is superior to Sulfur in efficiency, time of action and use safety.
12. In the basic composition (claim 1) the addition of natural hydrated copper sulfate (CuSO₄x 5H₂O) from 10 to 15% in powder (talc) creates a natural product which has a strong action against sensitive to copper fungi, and also to most of plant parasitic bacteria.
